# EUROPÄISCHE PATENTANMELDUNG

(11) **EP 4 431 560 A1**
(43) Veröffentlichungstag der Anmeldung: **18.09.2024**
(21) Anmeldenummer: 23162061.8
(22) Anmeldetag: 15.03.2023
(51) Int. Cl.: C08K 5/00, C08K 5/523, B32B 27/00, C09J 5/00, C10M 137/04, E02F 9/00, E04H 15/00, F16L 11/00, H01B 7/00

(54) **PHOSPHORSÄUREESTER-ZUSAMMENSETZUNGEN FÜR FLAMMWIDRIGES WEICH-PVC MIT HOHER FARBSTABILITÄT**

(71) Anmelder: LANXESS Deutschland GmbH, 50569 Köln (DE)
(72) Erfinder: Omann, Lukas, 50931 Köln (DE); Mauerer, Otto, 42799 Leichlingen (DE); Hansel, Jan-Gerd, 51469 Bergisch Gladbach (DE)

(57) **Zusammenfassung**

Mischungen enthaltend mindestens zwei Substanzen der allgemeinen Formel (I)

(RO)ₘ(PhO)₃₋ₘP=O (I)

mit m = 1, 2 oder 3, worin R dem Rest 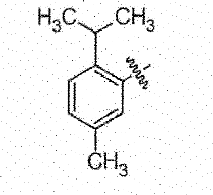 und Ph dem Phenylrest entspricht, zeigen eine einzigartige Kombination aus hoher Farbstabilität, hoher Flammwidrigkeit und weichmachender Wirkung, aufgrund derer sie sich für eine Verwendung als Flammschutzmittel in PVC-Compounds, als Hydraulikflüssigkeit, als Schmierstoffadditiv oder als Additiv für Lacke, Klebstoffe, Dichtmassen oder Beschichtungen empfehlen.

## Beschreibung

Phosphorsäureester können in verschiedenen technischen Anwendungen eingesetzt werden, z.B. als Schmierstoffe (vgl. US 10,414,964 B2), Hydraulikflüssigkeiten (vgl. US 6,703,355 B2), Weichmacher (vgl. DE 1 768 076) oder als Flammschutzmittel (vgl. US 8,129,457 B2).

Die Flammschutzwirkung von Phosphorsäureestern wurde bereits in verschiedenen Kunststoffen, z.B. in PVC (vgl. GB 2 302 543 A), in Polyolefinen (vgl. US 11,008,440 B2), in Celluloseestern (US 9,000,148 B2), in Polyurethanen (vgl. US 8,129,457 B2) oder in Stryrolpolymeren (vgl. US 8,026,303 B2) gezeigt.

Im Stand der Technik sind verschiedene Arten von Phosphorsäureestern und deren Verwendung als Flammschutzmittel beschrieben. Beispielweise werden Phosphorsäurearylester verwendet, die aus Phenol, Kresol, tert-butyliertem Phenol, isopropyliertem Phenol oder Mischungen daraus aufgebaut sind.

Neben Phosphorsäuretriarylestern kennt der Fachmann auch gemischte Phosphorsäurealkyl-arylester. Diese werden beispielsweise als Flammschutzmittel eingesetzt, wenn eine erhöhte Farb- bzw. Hitzestabilität erforderlich ist (vgl. US 5,087,521). Das ist unter anderem für Kunststoffe im Außenbereich, insbesondere für Beschichtungen, für Kabel, für Planen, Markisen oder Zelte, erforderlich, damit das Material unter Einwirkung von Hitze nicht vergilbt. Die erhöhte Farbstabilität wird jedoch erkauft durch eine im Vergleich zu Triarylphosphaten geringere Flammschutzwirkung. In US 5,087,521 werden daher Mischungen aus Diarylalkylphosphaten und Triarylphosphaten eingesetzt. Auch wenn dieser Mangel gemäß US 5,087,521 durch die Verwendung von Mischungen aus Diarylalkylphosphaten und Triarylphosphaten abgeschwächt werden kann, bleibt die schlechte Flammschutzwirkung der Phosphorsäurealkyl-arylester ein Nachteil. Die Verwendung von zwei verschiedenen Flammschutzmittel-Zubereitungen gemäß US 5,087,521 stellt zudem einen erheblichen synthetischen Mehraufwand dar.

In ähnlicher Weise werden zur Herstellung farbstabiler, flammwidriger PVC-Materialien in EP 0401366 A4 Mischungen aus cyclischen Arylphosphaten mit halogenhaltigen Verbindungen eingesetzt. Die Verwendung halogenhaltiger Flammschutzmittel ist jedoch aus regulatorischer Sicht oft problematisch.

Die im Stand der Technik beschriebenen Phosphorsäuretriarylester-Zusammensetzungen zeigen im Allgemeinen eine hohe Flammschutzwirkung in PVC. Die damit hergestellten Weich-PVC-Materialien weisen jedoch eine geringe Thermostabilität auf. Ein weiterer Nachteil vieler Phosphorsäuretriarylester-Zusammensetzungen aus dem Stand der Technik ist ihr Gehalt an Triphenylphosphat. Dessen Gefahrstoffeigenschaften haben dazu geführt, dass immer niedrigere Gehalte dieser Substanz in verbrauchernahen Anwendungen gefordert werden.

Zur Herstellung von Weich-PVC mit erhöhter Thermostabilität sind dem Fachmann auch komplexe Formulierungen bekannt, enthaltend einen Weichmacher, ein Flammschutzmittel, einen Stabilisator und gegebenenfalls weitere Zusatzstoffe. So wird beispielsweise in WO 2022 121330 A1 die Herstellung von flammwidrigen Weich-PVC beschrieben, bei dem eine Mischung aus Trioctyltrimellitat (Weichmacher), Antimontrioxid (Flammschutzmittel), einem Calcium-Zink-Stabilisator und Calciumcarbonat (Füllstoff) eingesetzt wird. Die hohe Anzahl an benötigten Additiven führt jedoch zu einem erheblichen technischen Mehraufwand. Zudem wirkt sich Antimontrioxid negativ auf die Transparenz der PVC-Compound auf, was für manche anspruchsvolle Anwendungen nicht wünschenswert ist.

Aufgabe der vorliegenden Erfindung war es daher, eine Flammschutzmittel-Zubereitung bereitzustellen, welche neben einer ausreichenden Flammschutzwirkung eine weichmachende Wirkung für Kunststoffe, insbesondere für PVC-Formmassen und zudem eine hohe Farbstabilität aufweist. Bevorzugt sollte diese Flammschutzmittel bei Raumtemperatur in flüssiger Form vorliegen, durch ein wenig aufwändiges Verfahren und mit einem niedrigen Gehalt an Triphenylphosphat erhältlich sein.

Die genannten Aufgabe wird gelöst durch Mischungen enthaltend mindestens zwei Substanzen der allgemeinen Formel (I)

(RO)ₘ(PhO)₃₋ₘP=O (I)

mit m = 1, 2 oder 3, worin R dem Rest 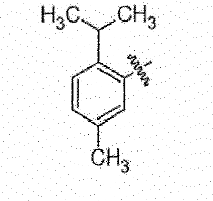
und Ph dem Phenylrest entspricht.

In einer bevorzugten Ausführungsform der Erfindung enthält die erfindungsgemäße Mischung (RO)₃P=O, (RO)₂(PhO)P=O, (RO)(PhO)₂P=O und (PhO)₃P=O (Triphenylphosphat, "TPP") sowie gegebenenfalls Nebenkomponenten, wie beispielsweise Thymol, Phenol, Katalysatorbestandteile, oder Nebenprodukte.

Die erfindungsgemäßen Mischungen enthalten vorzugsweise 50 Gew.-% oder mehr, besonders bevorzugt 70 Gew.-% oder mehr, ganz besonders bevorzugt 80 Gew.-% oder mehr und meist bevorzugt 90 Gew.-% oder mehr Substanzen der allgemeinen Formel (I)

(RO)ₘ(PhO)₃₋ₘP=O (I),

wobei R, Ph und m die oben angegebenen Bedeutungen haben.

In einer bevorzugten Ausführungsform enthalten die erfindungsgemäßen Mischungen
(i) 5 bis 90 Gew.-% (RO)₂(PhO)P=O, und
(ii) 5 bis 90 Gew.-% (RO)(PhO)₂P=O,
jeweils bezogen auf die Gesamtmenge an Verbindungen der Formel (I) mit m = 0,1 , 2 oder 3, wobei R und Ph die oben genannten Bedeutungen haben.

Eine weitere bevorzugte Ausführungsform sind Mischungen enthaltend:

| | |
|---|---|
| (RO)₃P=O | 0 bis 30 Gew.-% |
| (RO)₂(PhO)P=O | 5 bis 90 Gew.-% |
| (RO)(PhO)₂P=O | 5 bis 90 Gew.-% |
| (PhO)₃P=O ("TPP") | 0 bis 30 Gew.-% |

jeweils bezogen auf das Gesamtgewicht der Verbindungen der Formel (I) mit m = 0, 1 , 2 oder 3, vorzugsweise jeweils bezogen auf das Gesamtgewicht der Mischung, wobei R und Ph die oben genannten Bedeutungen haben

Bevorzugt enthalten die erfindungsgemäßen Mischungen weniger als 1 Gew.-%, besonders bevorzugt weniger als 0,5 Gew.-%, weiter bevorzugt weniger als 0,2 Gew.- %, ganz besonders bevorzugt weniger als 0,5 Gew.-% und meist bevorzugt nicht mehr als 0,1 Gew.-% Triphenylphosphat.

Bevorzugt liegen die erfindungsgemäßen Mischungen bei 23°C als Flüssigkeit vor, da eine solche Zustandsform die Verwendung als Flammschutzmittel bzw. in Schmiermitteln oder Hydraulikflüssigkeiten erleichtern oder erst ermöglichen. Bevorzugt weisen die erfindungsgemäßen Mischungen eine dynamische Viskosität von 20 bis 5000 mPa·s, besonders bevorzugt von 50 bis 2000 mPa·s (jeweils bei 23°C) auf.

Bevorzugt weisen die erfindungsgemäßen Mischungen eine Säurezahl kleiner 5 mg KOH/g, bevorzugt kleiner 1 mg KOH/g, besonders bevorzugt kleiner 0,3 mg KOH/g, ganz bevorzugt kleiner 0,1 mg KOH/g auf.

Überraschenderweise zeigte sich, dass PVC-Formmassen enthaltend die erfindungsgemäße Mischung eine hohe Farbstabilität und eine hohe Flammwidrigkeit aufweisen. Die erfindungsgemäßen Mischungen können unerwartet einfach in einem neuartigen Verfahren hergestellt werden. Eine bevorzugte Ausführungsform des Verfahrens erlaubt dabei die Herstellung in einer Form, dass die Mischung kein oder nur sehr wenig Triphenylphosphat enthält.

Ein weiterer Gegenstand der Erfindung ist ein Verfahren zur Herstellung der erfindungsgemäßen Mischungen, umfassend die Schritte:
a) Bereitstellen einer Mischung enthaltend Phosphoroxychlorid und Thymol,
b) Umsetzung zumindest eines Teils der Mischung aus a) bei Temperaturen zwischen 80°C bis 300°C unter Abtrennung von Chlorwasserstoff,
c) Zugabe von Phenol zu der aus b) erhaltenen Mischung und weitere Umsetzung zwischen 100°C bis 300°C unter Abspaltung von Chlorwasserstoff,

In einer alternativen Ausführungsform wird zumindest ein Teil des Phosphoroxychlorids erst in Schritt b) zudosiert. Es ist auch möglich, dass zumindest ein Teil des Thymols erst in Schritt b) zudosiert wird.

Zu der in Schritt a) bereitgestellten Mischung oder während des Schritts b) kann optional ein Katalysator zugesetzt werden. Geeignete Katalysatoren sind NaCl, KCl, LiCl, MgCl₂, MgO, CaCl₂, AlCl₃, FeCl₃, ZnCl₂, TiCl₄, SbCl₄ und andere. Optional können ein oder mehrere Katalysatoren auch vor oder während Schritt c) zugesetzt werden.

Die Umsetzung gemäß Schritt b) erfolgt üblicherweise im Bereich von 80°C bis 300°C, vorzugsweise im Bereich von 100°C bis 250°C, besonders bevorzugt im Bereich von 100°C bis 200°C.

Optional kann zwischen dem Schritt b) und dem Schritt c) eine destillative Abtrennung von (nicht umgesetzten) Edukten des Schritts a) und/oder gebildeten Nebenprodukten erfolgen. Die Destillation kann als Batch-Verfahren oder als kontinuierlicher Prozess durchgeführt werden. Die Temperatur der Destillation liegt vorzugsweise im Bereich von 80°C bis 250°C. Besonders bevorzugt wird die Destillation bei der Reaktionstemperatur von Schritt b) oder bei einer Temperatur zwischen 80°C und der Reaktionstemperatur von Schritt b) durchgeführt. Die Destillation erfolgt in einem Druckbereich von 0,01 mbar und 1013 mbar, bevorzugt im Bereich von 0,01 mbar und 100 mbar, ganz besonders bevorzugt im Bereich von 0,01 mbar und 50 mbar.

Die Umsetzung gemäß Schritt c) erfolgt üblicherweise im Bereich von 100°C bis 300°C, vorzugsweise im Bereich von 100°C bis 250°C, besonders bevorzugt im Bereich von 120°C bis 250°C.

In einer alternativen Ausführungsform wird zumindest ein Teil des Phenols erst während der Reaktion in Schritt c) zudosiert. Es ist auch möglich, dass zumindest ein Teil der Reaktionsmischung erhalten aus Schritt b) (entweder direkt oder nach destillativer Abtrennung von den Edukten des Schritts a) und/oder gebildeten Nebenprodukten in Schritt b)) während der Reaktion in Schritt c) zudosiert wird.

Optional kann nach dem Schritt c) eine destillative Abtrennung von (nicht umgesetzten) Edukten und/oder gebildeten Nebenprodukten der Schritte b) und/oder c) erfolgen. Die Destillation kann als Batch-Verfahren oder als kontinuierlicher Prozess durchgeführt werden. Die Temperatur der Destillation liegt vorzugsweise im Bereich von 80°C bis 250°C. Die Destillation erfolgt in einem Druckbereich von 0,01 mbar und 1013 mbar, bevorzugt im Bereich von 0,01 mbar und 100 mbar, ganz besonders bevorzugt im Bereich von 0,01 mbar und 50 mbar.

Die erfindungsgemäßen Mischungen können je nach Anwendung noch weitere Hilfsstoffe enthalten. Als Hilfsstoffe kommen zum Beispiel Weichmacher, weichmachende Polymere, polymere Modifikatoren, Stabilisatoren (z.B. Thermostabilisatoren, Lichtstabilisatoren, Antioxidantien), Co-Stabilisatoren (z.B. Säurefänger, Radikalfänger), innere und äußere Gleitmittel, Viskositätsregler, Füllstoffe, Farbpigmente, Farbstoffe, Flammschutzmittel, Flammschutzmittel-Synergisten, Treibmittel sowie weitere Funktionsadditive wie z.B. Antistatika, Nukleierungsmittel, UV-Schutzmittel oder Biozide, in Frage (siehe z.B. R. D. Maier, M. Schiller, Handbuch Kunststoff-Additive, 4. Auflage, München, Carl Hanser Verlag, 2016, S. 513 ff).

Die erfindungsgemäßen Mischungen eignen sich als Flammschutzmittel. Ein weiterer Gegenstand der vorliegenden Erfindung ist somit die Verwendung der erfindungsgemäßen Mischungen als Flammschutzmittel.

Die erfindungsgemäßen Mischungen können als Flammschutzmittel in allen dem Fachmann bekannten Anwendungen für Flammschutzmittel verwendet werden. Bevorzugt werden die erfindungsgemäße Mischungen als Flammschutzmittel für
- synthetische Polymere, wie Polyolefine, Polyvinylchlorid, Polycarbonate, Styrolbasierte (Co-)Polymere, Polyamide, Polyester, Polyurethane, Elastomere wie NBR, CR, SBR, oder EPDM und Duroplaste wie Epoxidharze, ungesättigte Polyesterharze und Phenol-Formaldehydharze,
- Werkstoffe pflanzlichen Ursprungs, wie Holz, Holz-Kunststoff-Komposite, Papier und Pappe, und
- Werkstoffe tierischen Ursprungs, wie Leder, verwendet.

Besonders bevorzugt werden die erfindungsgemäßen Mischungen als Flammschutzmittel für Polyvinylchlorid (PVC) verwendet, beispielsweise in PVC-Formmassen, d.h. in Zusammensetzungen enthaltend PVC welche in Form eines Granulats, eines Pulvers, einer Paste oder eines Plastisols vorliegen.

Gegenstand der Erfindung sind daher auch Zusammensetzungen vorzugsweise in Form eines Granulats, eines Pulvers, einer Paste oder eines Plastisols, enthaltend eine erfindungsgemäße Mischung und Polyvinylchlorid (PVC). Bevorzugt handelt es sich bei diesen erfindungsgemäßen PVC-Formmassen um Weich-PVC. Die erfindungsgemäßen PVC-Formmassen können hergestellt werden, indem man PVC mit den erfindungsgemäßen Mischungen und gegebenenfalls weiterer Hilfsstoffe, z.B. Stabilisatoren in an sich bekannter Weise (siehe z.B. G. Becker, D. Braun, Kunststoff-Handbuch, Polyvinylchlorid, Bd.2/2, München, Wien, Carl Hanser Verlag, 1986, S.829 ff) vermischt und compoundiert oder zu einem verarbeitungsbereiten Plastisol oder Organosol dispergiert.

Die erfindungsgemäße PVC-Formmasse enthält vorzugsweise 5 bis 150 Gewichtsteile, besonders bevorzugt 30 bis 70 Gewichtsteile an Phosphorsäureestern der Formel (I) bezogen auf 100 Gewichtsteile PVC. In einer bevorzugten Ausführungsform enthält die erfindungsgemäße PVC-Formmasse 5 bis 150 Gewichtsteile, besonders bevorzugt 30 bis 70 Gewichtsteile an Phosphorsäureestern der Formel (I) bezogen auf 100 Gewichtsteile PVC.

Die erfindungsgemäße PVC-Formmasse findet Anwendung in Beschichtungen, Folien, Kabel, Rohrleitungen, Schläuchen, Dichtungen, Förderbändern, Dachbahnen, Klebebandfolien, Planen, Markisen und Zelten.

Ein weiterer Gegenstand der Erfindung ist die Verwendung der erfindungsgemäßen Mischungen in Hydraulikflüssigkeiten oder zur Herstellung von Hydraulikflüssigkeiten. Bevorzugt werden die erfindungsgemäßen die Mischungen in flammwidrigen Hydraulikflüssigkeiten verwendet.

Ein weiterer Gegenstand der Erfindung ist die Verwendung der erfindungsgemäßen Mischungen als Schmierstoffadditiv. Bevorzugt werden die erfindungsgemäßen Mischungen in flammwidrigen Schmierstoffen verwendet.

Ein weiterer Gegenstand der Erfindung ist die Verwendung der erfindungsgemäßen Mischungen als Additiv für Lacke, Klebstoffe, Dichtmassen und Beschichtungen.

Ein weiterer Gegenstand der Erfindung ist die Verwendung der erfindungsgemäßen Mischungen als Wärmeträger oder in Zubereitungen, die als Wärmeträger verwendet werden. Bevorzugt werden die erfindungsgemäßen Mischungen als Wärmeträger oder in Wärmeträger-Zubereitungen in der Immersionskühlung elektrischer Komponenten verwendet. Die Wärmeträger-Zubereitungen enthalten neben den erfindungsgemäßen Mischungen beispielsweise weitere Trialkylphosphate, Triarylphosphate, Mineralöle, Polyalphaolefine, Ester, Antioxidantien, Metalldeaktivatoren, Fließadditive, Korrosionsinhibitoren, Schauminhibitoren, Demulgatoren und/oder Pourpoint-Erniedriger.

### Beispiele

### Synthesebeispiele

### Synthesebeispiel 1

In einem Reaktor mit Rührer, Innenthermometer, Stickstoffeinleitung und Rückflusskühler wurden Phosphoroxychlorid (200 Gewichtsteile), Thymol (197 Gewichtsteile) und Magnesiumchlorid (0,1 Gewichtsteile) vorgelegt. Die Reaktionsmischung wurde unter Rührung auf 120°C erhitzt und bei dieser Temperatur solange gehalten, bis kaum noch Gasbildung zu beobachten war. Der Druck in der Apparatur wurde schrittweise von Atmosphärendruck auf 10 mbar gesenkt und für 1 h unter Endbedingungen gehalten. Nach Zugabe von Phenol (307 Gewichtsteile) wurde die Temperatur der Reaktionsmischung schrittweise auf eine Endtemperatur von 160°C erhöht und bis zum vollständigen Umsatz bei dieser Temperatur gehalten. Überschüssiges Phenol wurde bei einer Endtemperatur von 160°C und einem Druck von 10 mbar entfernt. Die Produktmischung wurde als viskose Flüssigkeit (110 mPa·s bei 23°C) isoliert. Die Säurezahl betrug < 0,1 mg KOH/g. Die Produktmischung enthielt 0,6 Gew.-% (ThymylO)₃P=O, 12,7 Gew.-% (ThymylO)₂(PhO)P=O, 86,3 Gew.-% (ThymylO)-(PhO)₂P=O und 0,4 Gew.-% (PhO)₃P=O ("TPP").

### Synthesebeispiel 2

In einem Reaktor mit Rührer, Innenthermometer, Stickstoffeinleitung und Rückflusskühler wurden Phosphoroxychlorid (200 Gewichtsteile), Thymol (295 Gewichtsteile) und Magnesiumchlorid (0,1 Gewichtsteile) vorgelegt. Die Reaktionsmischung wurde unter Rührung schrittweise auf 160°C erhitzt und bei dieser Temperatur solange gehalten, bis kaum noch Gasbildung zu beobachten war. Nach Zugabe von Phenol (307 Gewichtsteile) wurde die Temperatur der Reaktionsmischung schrittweise auf eine Endtemperatur von 190°C erhöht und bis zum vollständigen Umsatz bei dieser Temperatur gehalten. Überschüssiges Phenol wurde bei einer Endtemperatur von 190°C und einem Druck von 10 mbar entfernt. Die Produktmischung wurde als viskose Flüssigkeit (210 mPa·s bei 23°C) isoliert. Die Säurezahl betrug < 0,1 mg KOH/g. Die Produktmischung enthielt 2,4 Gew.-% (ThymylO)₃P=O, 56,0 Gew.-% (ThymylO)₂(PhO)-P=O, 41,4 Gew.-% (ThymylO)(PhO)₂P=O und 0,2 Gew.-% (PhO)₃P=O ("TPP").

### Synthesebeispiel 3

In einem Reaktor mit Rührer, Innenthermometer, Stickstoffeinleitung und Rückflusskühler wurden Phosphoroxychlorid (200 Gewichtsteile), Thymol (394 Gewichtsteile) und Magnesiumchlorid (0,1 Gewichtsteile) vorgelegt. Die Reaktionsmischung wurde unter Rührung schrittweise auf 160°C erhitzt und bei dieser Temperatur solange gehalten, bis kaum noch Gasbildung zu beobachten war. Nach Zugabe von Phenol (186 Gewichtsteile) wurde die Temperatur der Reaktionsmischung schrittweise auf eine Endtemperatur von 190°C erhöht und bis zum vollständigen Umsatz bei dieser Temperatur gehalten. Überschüssiges Phenol wurde bei einer Endtemperatur von 190°C und einem Druck von 10 mbar entfernt. Die Produktmischung wurde als viskose Flüssigkeit (390 mPa s bei 23°C) isoliert. Die Säurezahl betrug < 0,1 mg KOH/g. Die Produktmischung enthielt 8,6 Gew.-% (ThymylO)₃P=O, 81,1 Gew.-% (ThymylO)₂(PhO)P=O, 10,2 Gew.-% (ThymylO)(PhO)₂P=O und < 0,1 Gew.-% (PhO)₃P=O ("TPP").

Die Einsatzmengen der Synthesebeispiele S1 bis S3 sind in Tabelle 1 zusammengefasst.

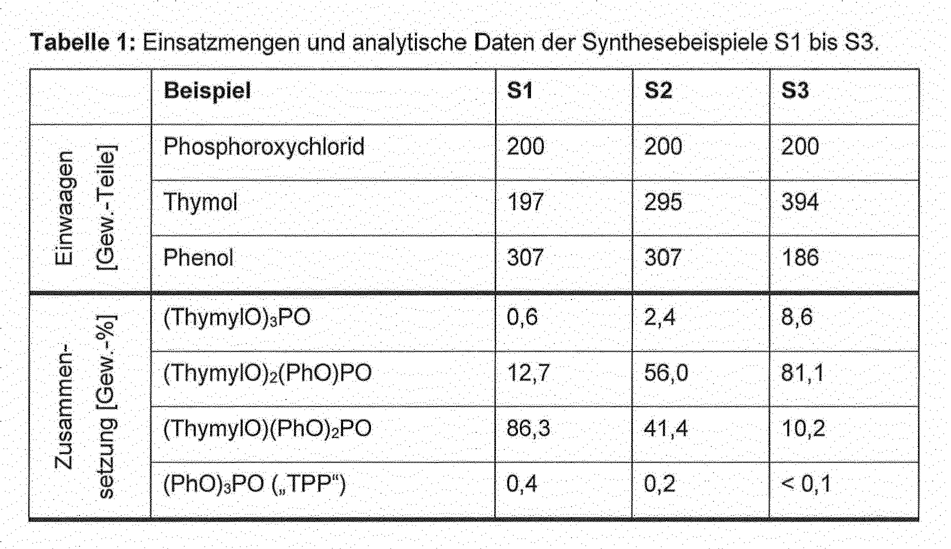

### Bestimmung der Zusammensetzung der Phosphorsäureester-Zusammensetzung

Quantitative GC-FID-Analytik wurde mit einem Agilent GC-Gerät des Typs 7890A ausgestattet mit einer Quarzkapillarsäule des Typs CB-Sil 5 CB (Länge: 30 m, Durchmesser: 0,32 mm, Schichtdicke: 3,00 µm) durchgeführt. Als Trägergas wurde Wasserstoff verwendet. Die Injektion der Probe (gelöst in Aceton) erfolgte im Split-Modus (86:1) bei einer Temperatur von 300°C. Folgendes Temperaturprogramm wurde eingestellt: 60°C Starttemperatur, Heizrate 10°C/min bis zu einer Temperatur von 150°C, dann mit einer Heizrate von 25°C/min auf 280°C, Haltezeit: 10 min, dann mit einer Heizrate von 25°C/min auf eine Endtemperatur von 320°C/min, Haltezeit: 10 min. Die Auswertung erfolgte durch Integration des entsprechenden basisliniengetrennten Signals und Umrechnen der Peakflächen in einen Gehalt nach vorheriger Kalibration.

### Bestimmung der Viskosität der Phosphorsäureester-Zusammensetzung

Die Messung der dynamischen Viskosität von Phosphorsäureestern erfolgte mit einem Anton Paar Scherrheometer des Typs MCR 102 bei der angegebenen Temperatur mit einer Scherrate von 200 s⁻¹ gemäß DIN 53018.

### Bestimmung der Säurezahl der Phosphorsäureester-Zusammensetzung

Die Säurezahl der Proben wurde in Anlehnung an die DIN EN ISO 2114 (Verfahren B, kolorimetrische Titration mit Phenolphthalein) durchgeführt. Dazu wurde die Probe (10 g) eingewogen, in Aceton (200 mL) und Wasser (50 mL) gelöst und mit 2-3 Tropfen einer Phenolphthalein-Lösung (0,1 Gew.-% in EthanollWasser (v/v = 4/1)) versetzt. Aus einer Bürette wurde solange Natronlauge (0,1 mol/L) titriert bis der Farbumschlag von farblos zu pink für mindestens 10 Sekunden unter Rühren bestehen blieb. In gleicher Weise aber ohne Probe wurde ein Blindwert gemessen.

### Veraleichsmuster bekannter Phosphorsäurester-Zusammensetzunaen

In Tabelle 2 sind bekannte Phosphorsäureester-Zusammensetzungen aufgelistet, die als Vergleichsmuster zur Herstellung von Weich-PVC eingesetzt wurden. Alle Vergleichsmuster sind Produkte der Lanxess Deutschland GmbH.

**Tabelle 2: Eingesetzte Vergleichsmuster.**

| **Vergleichsmuster** | **Alkohol-/Phenol-Komponente** | **Zustand bei 23°C** |
|---|---|---|
| Disflamoll^{®} DPK | Kresol/Phenol | flüssig |
| Disflamoll^{®} TKP | Kresol | flüssig |
| Disflamoll^{®} 51092 | t-Butylphenol/Phenol | flüssig |
| Disflamoll^{®} DPO | Phenol/2-Ethylhexanol | flüssig |
| Reofos^{®} 65 | Isopropylphenol/Phenol | flüssig |

### Herstellung von Weich-PVC

Die für die Ausprüfung eingesetzten Weich-PVC-Formmassen wurden auf einem Laborwalzwerk hergestellt. Nach dem Aufgeben der Mischung aller Rezepturbestandteile (siehe Tabelle 3) beließ man diese auf der Walze bis eine Fellbildung erfolgte. Ab dem Zeitpunkt der Fellbildung wurden die Compounds noch 10 Minuten auf dem Walzwerk compoundiert und schließlich als Walzfell abgenommen. Die Walztemperatur betrug 165°C.

Die Prüfkörper zur Bestimmung des LOI wurden aus den Walzfellen mit einer Presse hergestellt. Die Presstemperatur betrug 170°C, die Pressdauer 4 Minuten zum Vorwärmen bei Niederdruck (< 10 bar) und 2 Minuten bei Hochdruck (> 100 bar). Aus den 4 mm dicken Pressplatten wurden Prüfkörper mit den Abmessungen 90 x 13 x 4 mm gesägt.

Die Prüfkörper zur Bestimmung der Härte der Compounds (50 x 40 x 6 mm) werden wegen der großen Dicke von 6 mm bei gleicher Temperatur länger gepresst. Die Pressdauer betrug 7 Minuten zum Vorwärmen bei Niederdruck und 3 Minuten zum Formpressen bei Hochdruck.

Die Prüfkörper für die Prüfung der Farbstabilität wurden aus einem dünnen (< 1 mm) Walzfell geschnitten, das nach 10 Minuten Walzzeit vom Walzwerk abgenommen wurde.

**Tabelle 3: Rezepturbestandteile zur Herstellung von Weich-PVC.**

| **Komponente** | **Funktion** | **Beschreibung** | **Menge** (Gewichtsteil e) |
|---|---|---|---|
| A | PVC | Vinnol S4170 | 100 |
| B | Co-Stabilisator | Drapex 39 | 2,5 |
| C | PVC-Stabilisator | Bärostab UBZ 780 RF | 2,5 |
| D | Flammschutzmittel | Wie in Tabelle 4 dargestellt | 55 |

Nach dieser Vorschrift wurden PVC-Muster hergestellt.

### Bestimmung der Flammwidrigkeit und der Weichmacherwirkung

Für die Beurteilung der Flammwidrigkeit wurde der Sauerstoffindex (Limiting Oxygen Index = LOI) herangezogen. Der LOI ist ein Maß für das Brandverhalten von Kunststoffen und anderen Werkstoffen. Der LOI ist die minimale Sauerstoffkonzentration eines Sickstoff/Sauerstoff-Gemisches, unter der die Verbrennung eines Prüfkörpers unter normierten Bedingungen gerade noch stattfinden kann. Die Prüfung wurde gemäß ISO 4589-2 durchgeführt. Für eine praktische Anwendbarkeit sollte bei der Prüfung ein Wert von mindestens 30 erzielt werden.

Die Weichmacherwirkung der Phosphorsäureester wurde mit einer Shore A-Härte-Messung der Phosphorsäureester-enthaltenden Weich-PVC-Compounds bestimmt. Das Messprinzip beruht auf der Eindringtiefe eines Metallprüfstiftes in die Materialprobe für 15 s mit einer Kraft von 12,5 N. Bestimmt wurde die Shore A-Härte bei Prüfkörpern mit den Abmessungen von 50 x 40 x 6 mm. Die Shore-Härte-Messung wurde in Anlehnung an die DIN ISO 7619-1 ausgeführt. Als Indikator für eine weichmachende Wirkung ist eine Shore A-Härte von weniger als 95 anzusehen.

Die Ergebnisse der Messungen sind in Tabelle 4 zusammengefasst.

**Tabelle 4: Bestimmung der Flammwidrigkeit der hergestellten PVC-Muster**

| **Beispiel** | **Flammschutzmittel (Komponente D)** | **LOI > 30** | **Shore A-Härte < 95** |
|---|---|---|---|
| V1 | Disflamoll DPK | + | + |
| V2 | Disflamoll TKP | + | + |
| V3 | Disflamoll 51092 | + | + |
| V4 | Disflamoll DPO | - | + |
| V5 | Reofos 65 | + | + |
| E6 | S1 | + | + |
| E7 | S2 | + | + |
| E8 | S3 | + | + |

Die Ergebnisse zeigen, dass die erfindungsgemäßen Phosphorsäureester-Zusammensetzungen in PVC ähnlich gute Flammschutzeigenschaften bewirken wie die Vergleichsprodukte Disflamoll DPK, Disflamoll TKP, Disflamoll 51092 und Reofos 65. Erwartungsgemäß liegt der LOI des PVC-Compounds des Phosphorsäurealkyl-arylesters Disflamoll DPO deutlich niedriger, was mit einer geringeren Flammschutzwirkung einhergeht. Alle verwendeten Flammschutzmittel erreichten im Test Shore A-Härten von unter 95, d.h. zeigten eine weichmachende Wirkung.

### Bestimmung der Farbstabilität

Alle Kunststoffe unterliegen einem unerwünschten Alterungsprozess, der sich in veränderten mechanischen Werten und einer Veränderung der Farbe, meist Vergilbung, zeigt. Die Farbstabilität der Weich-PVC-Compounds bei Temperaturbelastung wurde mit dem Mathisofen (Mathis Thermotester LTE T) geprüft. Hierbei wurden Materialproben bei 180°C in einem Umluftofen gelagert. Intervallweise wurden Materialproben aus dem heißen Ofenbereich herausgefahren, so dass man unterschiedlich lang temperaturexponierte Materialproben erhielt. Die Gelbwerte (Delta E-Werte) wurden mit einem Minolta Chroma-Meter CR 400 bestimmt. Die Messung wurde in Anlehnung an DIN-EN-ISO 10545-16 durchgeführt. Die Messung wurde bei Werten von größer 65 gestoppt.

**Tabelle 5: Gemessene Gelbwerte nach Lagerung im Ofen bei 180°C**

| **Beispiel** | **Flammschutzmittel (Komponente D)** | **Gelbwertzunahme nach angegebener Zeit** | | | | | |
|---|---|---|---|---|---|---|---|
| | | **5 min** | **10 min** | **15 min** | **20 min** | **25 min** | **30 min** |
| V1 | Disflamoll DPK | 1,20 | 8,35 | 40,68 | 71,38 | 63,91 | 65,21 |
| V2 | Disflamoll TKP | 0,92 | 3,25 | 16,94 | 66,79 | 65,38 | 63,23 |
| V3 | Disflamoll 51092 | 1,00 | 5,57 | 18,46 | 63,49 | 71,09 | 63,28 |
| V4 | Disflamoll DPO | 1,45 | 9,17 | 31,13 | 67,00 | 75,17 | 65,76 |
| V5 | Reofos 65 | 0,35 | 3,75 | 14,89 | 41,86 | 56,33 | 68,88 |
| E6 | S1 | 1,72 | 1,58 | 1,49 | 5,68 | 25,62 | 44,74 |
| E7 | S2 | 0,26 | 0,48 | 2,07 | 7,27 | 15,63 | 30,91 |
| E8 | S3 | 0,22 | 0,28 | 1,12 | 4,70 | 9,68 | 23,01 |

Die Ergebnisse zeigen, dass bei den PVC-Compounds enthaltend die erfindungsgemäßen Phosphorsäureester-Zusammensetzungen S1, S2 und S3 die Zunahme des Gelbwerts (d.h. der Verfärbung) deutlich später auftritt als bei den Compounds enthaltend die Vergleichsprodukte.

## Patentansprüche

1. Mischungen enthaltend mindestens zwei Substanzen der allgemeinen Formel (I)
(RO)ₘ(PhO)₃₋ₘP=O (I)
mit m = 1, 2 oder 3, worin R dem Rest 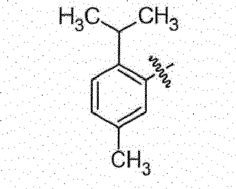
und Ph dem Phenylrest entspricht.

2. Mischungen gemäß Anspruch 1, welche
(i) 5 bis 90 Gew.-% (RO)₂(PhO)P=O und
(ii) 5 bis 90 Gew.-% (RO)(PhO)₂P=O,
enthalten, wobei R und Ph die oben genannten Bedeutungen haben.

3. Mischungen gemäß einem oder mehreren der Ansprüche 1 oder 2, welche weniger als 1 Gew.-%, bevorzugt weniger als 0,5 Gew.-%, besonders bevorzugt weniger als 0,2 Gew.- % und meist bevorzugt nicht mehr als 0,1 Gew.-% Triphenylphosphat enthalten.

4. Mischungen gemäß einem oder mehreren der Ansprüche 1 bis 3, wobei diese bei 23°C und 1013 mbar als Flüssigkeit vorliegen, bevorzugt als Flüssigkeit mit einer dynamischen Viskosität von 20 bis 5000 mPa·s, besonders bevorzugt von 50 bis 1000 mPa·s (jeweils bei 23°C).

5. Verfahren zur Herstellung von Mischungen gemäß einem oder mehreren der Ansprüche 1 bis 4 umfassend die Schritte:
(a) Bereitstellen einer Mischung enthaltend mindestens:
- Phosphoroxychlorid
- Thymol,
(b) Umsetzung zumindest eines Teils der Mischung aus a) bei Temperaturen zwischen 80°C bis 300°C unter Abtrennung von Chlorwasserstoff und
(c) Zugabe von Phenol zu der aus b) erhaltenen Mischung und weitere Umsetzung zwischen 100°C bis 300°C unter Abtrennung von Chlorwasserstoff.

6. Verfahren gemäß Anspruch 5, wobei zwischen dem Schritt b) und dem Schritt c) eine destillative Abtrennung von Edukten des Schritts a) und/oder von Nebenprodukten erfolgt.

7. Verfahren gemäß Anspruch 5 oder 6, wobei nach dem Schritt c) eine destillative Abtrennung von Edukten und/oder von Nebenprodukten der Schritte b) und/oder c) erfolgt.

8. Verwendung von Mischungen gemäß einem oder mehreren der Ansprüche 1 bis 4 als Flammschutzmittel, vorzugsweise als Flammschutzmittel für synthetische Polymere, Werkstoffe pflanzlichen Ursprungs oder Werkstoffe tierischen Ursprungs, und besonders bevorzugt als Flammschutzmittel für Polyvinylchlorid (PVC).

9. Formmasse enthaltend eine Mischung gemäß einem oder mehreren der Ansprüche 1 bis 4 und Polyvinylchlorid (PVC).

10. Formmasse gemäß Anspruch 9, welche von 5 bis 150 Gewichtsteile, vorzugsweise von 30 bis 70 Gewichtsteile an Phosphorsäureester der Formel (I) bezogen auf 100 Gewichtsteile PVC enthält.

11. Verwendung von Formmassen nach Anspruch 9 oder 10 zur Herstellung von Beschichtungen, Folien, Kabel, Rohrleitungen, Schläuchen, Dichtungen, Förderbändern, Dachbahnen, Klebebandfolien, Planen, Markisen oder Zeiten.

12. Verwendung von Mischungen gemäß einem oder mehreren der Ansprüche 1 bis 4 als Hydraulikflüssigkeit.

13. Verwendung von Mischungen gemäß einem oder mehreren der Ansprüche 1 bis 4 als Schmierstoffadditiv.

14. Verwendung von Mischungen gemäß einem oder mehreren der Ansprüche 1 bis 4 als Additiv für Lacke, Klebstoffe, Dichtmassen oder Beschichtungen.

15. Verwendung einer Mischung gemäß einem oder mehreren der Ansprüche 1 bis 4 als Wärmeträger.
